# EUROPÄISCHE PATENTSCHRIFT

(11) **EP 3 663 034 B1**
(45) Veröffentlichungstag und Bekanntmachung des Hinweises auf die Patenterteilung: **07.02.2024**
(21) Anmeldenummer: 19212766.0
(22) Anmeldetag: 02.12.2019
(51) Int. Cl.: B23P 19/06, B25B 29/02, F03D 13/10, F03D 13/20

(54) **VERFAHREN ZUM ANZIEHEN VON SCHRAUBVERBINDUNGEN**
METHOD FOR TIGHTENING SCREW JOINTS
PROCÉDÉ DE SERRAGE DE RACCORDS À VIS

(30) Priorität: 07.12.2018 DE 102018131305
(43) Veröffentlichungstag der Anmeldung: 10.06.2020
(73) Patentinhaber: Hohmann, Frank, 59581 Warstein (DE); Hohmann, Jörg, 59872 Meschede (DE)
(72) Erfinder:
(74) Vertreter: Janke Scholl Patentanwälte PartG mbB

(56) Entgegenhaltungen:
- EP-A1- 3 195 991
- EP-A1- 3 593 939
- JP-A- H08 257 851
- JP-A- 2015 059 755
- KR-A- 20130 026 039
- SU-A1- 1 601 424
- TABLIBAEV F N: "Flange joint assembly method - fitting bolts in sequence after measuring gaps between flanges", WPI / 2017 CLARIVATE ANALYTICS,, Bd. 1991, Nr. 36, 23. Oktober 1990 (1990-10-23), XP002795759,

## Beschreibung

Die Erfindung betrifft ein Verfahren zum Anziehen von Schraubverbindungen, die sich an Schraubpositionen befinden, welche in Reihe entlang zweier gegeneinander zu spannender Ringflansche angeordnet sind, wobei sich jede Schraubverbindung aus einem Gewindeelement und einer darauf aufgeschraubten Mutter zusammensetzt und die Mutter gegenüber dem einen, und das Gewindeelement gegenüber dem anderen der beiden Ringflansche abgestützt ist, mit einem entlang des durch die Ringflansche gebildeten Rings fahrbaren Werkzeugträger, dessen Bestandteile zumindest ein Werkzeug zum Anziehen der Schraubverbindung und ein Sensor sind.

Eine solche Vorrichtung, bzw. ein solches Verfahren ist aus der EP 3 195 991 A1 und ähnlich auch aus der EP 3 593 939 A1 bekannt. Beide dienen dazu, in Reihe entlang eines Flansches angeordnete Schraubverbindungen nacheinander festzuziehen. Jede einzelne Schraubverbindung setzt sich zusammen aus einem Gewindeelement in Gestalt eines Schraubbolzens, der sich mit seinem radial erweiterten Bolzenkopf von unten gegen den Flansch abstützt, und aus einer auf den Gewindeabschnitt des Schraubbolzens geschraubten Gewindemutter, wobei sich die Mutter von oben an dem Flansch abstützt. Das Anziehen bzw. Nachziehen der Schraubverbindung erfolgt, indem die Mutter längs des Gewindes nachgestellt wird. Dies erfolgt unter Verwendung eines auf einem selbstfahrenden Fahrzeug angeordneten Werkzeugs. Mittels eines Positionssensors und der durch diesen Sensor erfassten Positionssignale wird das Fahrzeug mit dem darauf angeordneten Werkzeug kontrolliert gefahren, bis sich aus den Sensorsignalen ergibt, dass sich das Werkzeug exakt in einer axialen Ausrichtung zur Verschraubungsachse des Schraubbolzens und der Gewindemutter befindet. Hierzu werden die Positionssignale des Positionssensors steuerungstechnisch zu Signalen für den Antrieb des Fahrzeugs verarbeitet. Die Steuerung ist außerdem dazu ausgebildet, den Anziehvorgang zu steuern.

In der Praxis sind die Kontaktflächen von Ringflanschen, wie sie typisch sind für die Verschraubung von Turmabschnitten einer Windkraftanlage, nicht exakt parallel zueinander ausgebildet. Sie liegen daher nicht vollflächig aneinander an. Vielmehr befindet sich vor dem Verschrauben der Ringflansche zwischen diesen noch ein zumindest teilweise umlaufender Spalt, dessen Höhe bezogen auf die Mittelachse der Ringflansche radial nach innen zunimmt. Ferner kann der Spalt, unter anderem aufgrund von fertigungsbedingten Toleranzen, eine ungleichmäßige Spalthöhe und damit Spaltgröße aufweisen. Dieser Spalt wird, zur festen Verbindung der Turmabschnitte, anschließend mittels der Schraubverbindungen geschlossen, die an Schraubpositionen über den gesamten Umfang der Ringflansche verteilt angeordnet sind.

Die XP-002795759 "Flange joint assembly method - fitting bolts in sequence after measuring gaps between flanges" schlägt vor, zwei Flansche von Verbindungen mit großem Durchmesser mit Schrauben aneinander zu befestigen, wobei die Verschraubungen in einer bestimmten Reihenfolge festgezogen werden. Die Verschraubungen werden in zwei Stufen montiert: Zuerst werden zwei Verschraubungen gegenüberliegend in jeweils einem zueinander fluchtenden Loch der beiden Flansche montiert und angezogen. Dann werden die entstandenen Spaltabstände entlang der Flanschverbindung an der Stelle aller Verschraubungslöcher gemessen, wobei die Löcher abhängig vom gemessenen Spaltmaß hierarchisch nummeriert werden. Schließlich werden die Schraubverbindungen gemäß der Reihenfolge der Nummerierung durch weitere Schraubverbindungen gespannt.

Ferner schlägt die JP H08 257851 A einen Leichtbauroboter vor, der über Mantelschellen an einem Rohrsystem verschraubt ist und über einen mechanischen Arm dazu ausgebildet ist, Verschraubungen an einer Flanschverbindung durchzuführen. Zusätzlich ist an dem Arm ein Sensor angeordnet, der das Spaltmaß zwischen den Flanschabschnitten sensiert.

Daher besteht die Aufgabe der vorliegenden Erfindung darin, ein alternatives Verfahren zum Anziehen von Schraubverbindungen vorzuschlagen, welches in besonderer Weise berücksichtigt, dass bei derartigen Flanschverbindungen zwischen den beiden Ringflanschen häufig ein Spalt mit ungleichmäßiger Höhe existiert.

Diese Aufgabe wird durch ein Verfahren zum Anziehen von Schraubverbindungen mit den Merkmalen des Anspruchs 1 gelöst. Bevorzugte oder vorteilhafte Ausführungsformen der Erfindung ergeben sich aus den Unteransprüchen.

Das erfindungsgemäße Verfahren zum Anziehen von Schraubverbindungen besteht darin,
a) dass der Werkzeugträger mindestens einmal entlang der gesamten Länge des Rings bewegt wird, und dass dabei wiederholt
   - mittels eines an dem Werkzeugträger angeordneten Wegsensors die jeweils aktuelle Längsposition des Werkzeugträgers in Bezug auf den Ring als Positionswert, und
   - mittels des Sensors die an der jeweiligen aktuellen Position vorhandene Größe des Spalts zwischen den beiden Ringflanschen als Spaltgrößenwert
   erfasst und an eine Steuer- und Auswerteeinheit übermittelt werden, welche die einzelnen Spaltgrößenwerte gemeinsam mit den jeweils zugeordneten Positionswerten als Datensätze speichert,
b) dass die Steuer- und Auswerteeinheit aus den in den Datensätzen enthaltenen Spaltgrößenwerten den größten oder einen überdurchschnittlich großen Spaltgrößenwert ermittelt und den diesem ermittelten Spaltgrößenwert zugeordneten Positionswert als eine Primärposition bestimmt,
c) und dass die anschließend durch das Werkzeug angezogene Schraubverbindung jene ist, welche sich an der Primärposition oder an einer in Umfangsrichtung auf die Primärposition unmittelbar folgenden Schraubposition befindet.

Anders gesagt wird der tatsächlich vorhandene Verlauf der Spaltgrößen anhand einer Vielzahl einzelner Spaltgrößenwerte zwischen den beiden Ringflanschen detektiert. Als Spaltgrößenwert ist insbesondere der vertikale Abstand zwischen den Ringflanschen an der jeweiligen Position zu verstehen. Die in der Regel nach innen hin größer werdende Spaltgröße zwischen den Ringflanschen ist beeinflusst von Form-, Fertigungs- und/oder Lagetoleranzen und wird mittels des erfindungsgemäßen Verfahrens schrittweise geschlossen, sodass eine erzielbare Montagevorspannkraft der Schraubverbindungen erhöht wird. Mithin kommen die ringförmigen Flanschverbindungen, wie sie typisch sind für die Verschraubung von Turmabschnitten einer Windkraftanlage, axial aneinander zur Anlage und werden mittels der Schraubverbindungen, deren Position konstruktionsseitig festgelegt und damit bekannt ist, gegeneinander gezogen. Die Schraubverbindungen haben in Umfangsrichtung einen stets gleichbleibenden Abstand, also Umfangsabstand, zueinander.

Die Positionswerte können nacheinander für jede Schraubverbindung, das heißt an jeder Schraubposition, ermittelt werden. Mit anderen Worten wird der Werkzeugträger von einer ersten Schraubverbindung zur benachbart dazu angeordneten Schraubverbindung bewegt, wobei an der jeweiligen Position zu dem Positionswert der jeweilige Spaltgrößenwert erfasst wird. Dies wird fortgeführt, bis der Werkzeugträger wieder an der ersten Schraubverbindungen ankommt.

Vorzugsweise ist der Werkzeugträger selbstfahrend ausgeführt, wobei der Werkzeugträger, gesteuert durch die Steuer- und Auswerteeinheit zu jeder Position entlang der Länge des Rings bewegt wird. Alternativ können Positionswerte zusammen mit Spaltgrößenwerten willkürlich an beliebigen Positionen entlang der gesamten Länge des Rings erfasst werden, also nicht in der Reihenfolge der Verschraubungen oder am Ort der Verschraubungen.

Vorzugsweise werden die genannten Schritte a) bis c) einmal oder mehrfach wiederholt, um ein besonders gleichmäßiges Anziehen der Schraubverbindungen zu gewährleisten und schließlich eine spaltfreie Verbindung zwischen den beiden Ringflanschen zu realisieren.

Nach einem ersten Schraubenanzug an der Primärposition bzw. im Bereich der Primärposition können die Schritte a) bis c) wiederholt werden, wobei neue Positionswerte und/oder andere Spaltgrößenwerte ermittelt werden und in Datensätzen der Steuer- und Auswerteeinheit abgelegt werden. Anhand der neu ermittelten Spaltgrößenwerte, die erneut an der Vielzahl von Positionen am Umfang des Rings ermittelt wurden, wird wiederum der größte oder ein überdurchschnittlich großer Spaltgrößenwert ermittelt. Der diesem ermittelten Spaltgrößenwert zugeordnete Positionswert wird als die neue Primärposition bestimmt, an der anschließend durch das Werkzeug die Schraubverbindung angezogen wird. Befindet sich direkt an dieser neu bestimmten Primärposition keine Schraubverbindung, wird gemäß Schritt c) die Schraubverbindung stattdessen an einer in Umfangsrichtung auf die neue Primärposition unmittelbar vor oder dahinter folgenden Schraubposition angezogen.

Diese Schritte können so lange wiederholt werden, bis der Spalt geschlossen ist, wobei nacheinander Primärpositionen bestimmt werden, die an unterschiedlichen Positionen der Ringflansche vorliegen können. Somit werden mehrere und gegebenenfalls auch unterschiedliche Schraubverbindungen nacheinander angezogen, bis der Spalt zwischen den Ringflanschen im Wesentlichen geschlossen ist. Dabei kann die Steuer- und Auswerteeinheit derart ausgelegt sein, dass sie eine nächste Schraubposition vorschlägt, das heißt eine neue Primärposition zum Anziehen der Schraubverbindung.

Bevorzugt werden wiederum anschließend sämtliche bis dahin noch nicht angezogenen Schraubverbindungen durch das Werkzeug angezogen. Mithin wird der Spalt zwischen den Ringflanschen gänzlich geschlossen, wobei die weiteren Schraubverbindungen nacheinander, diagonal, sternförmig oder willkürlich an- und/oder nachgezogen werden.

Ferner bevorzugt ist ein Laserscanner als Sensor vorgesehen. Mit dem Laserscanner werden die Ringflansche sowie der dazwischen liegende Spalt raster- oder linienartig abgetastet, um die Höhe des Spaltes zu vermessen und damit den Spaltgrößenwert an der jeweiligen Schraubposition zu bestimmen. Bevorzugt handelt es sich um einen zweidimensionalen Laserscanner.

Der Messstrahl des Laserscanners wird vorzugsweise in der Kontaktebene zwischen den beiden Ringflanschen ausgerichtet. Mit anderen Worten ist der Messstrahl derart ausgerichtet, dass der Messstrahl senkrecht auf die Innenmantelfläche der Ringspalte mit dem dazwischen liegenden Spalt gerichtet ist, das heißt auf die Spalt- bzw. Ringflanschklaffung.

Gemäß einer bevorzugten Ausführungsform wird der Werkzeugträger auf mehreren Rollen entlang des durch die Ringflansche gebildeten Rings verfahren. So ist mit einer Ausgestaltung vorgesehen, dass der Werkzeugträger zu seiner Abstützung auf der Oberseite der Flanschverbindung mit Rollen versehen ist, die auf horizontalen Drehachsen an dem Werkzeugträger gelagert sind. Aufgabe dieser Rollen ist es vor allem, das Gewicht des Werkzeugträgers mit dem darauf angeordneten Werkzeug zu tragen.

Zusätzlich kann der Werkzeugträger zu seiner seitlichen Abstützung, etwa gegen die Innenwandung des Turms der Windkraftanlage, mit zusätzlichen Rollen versehen sein, die auf im Wesentlichen vertikalen Drehachsen an dem Werkzeugträger gelagert sind. Vorzugsweise sind die Drehachsen dieser Rollen im Wesentlichen parallel zur Innenwandung des Turms angeordnet. Die Rollen, also jene auf horizontalen Drehachsen und jene auf im Wesentlichen vertikalen oder zur Innenwand des Turms parallelen Drehachsen gelagerten Rollen, müssen nicht alle angetrieben sein. Bevorzugt ist vielmehr eine Ausgestaltung, bei der die Rollen nur zum Teil, zum Beispiel nur eine einzige Rolle, angetrieben sind. Die übrigen Rollen sind dann nicht angetriebene, mitlaufende Rollen.

Von Vorteil ist, wenn eine Rolle, die besonders viel Gewicht des Werkzeugträgers trägt, eine angetriebene Rolle ist. Daher wird mit einer Ausgestaltung vorgeschlagen, dass jede angetriebene Rolle eine jener Rollen ist, die auf horizontalen Drehachsen gelagert sind.

Die Positionswerte der Schraubpositionen werden erfindungsgemäß mittels eines Wegsensors erfasst. Anhand der gemessenen Positionswerte ist die Steuer- und

Auswerteeinheit in der Lage, nach Bestimmung der Primärposition den Werkzeugträger von seiner momentanen Längsposition bezogen auf den Ring kontrolliert zum Positionswert der Primärposition solange zu verfahren, bis sich aus den Signalen des Wegsensors ergibt, dass sich das Werkzeug an der Schraubposition befindet. Unter der Schraubposition ist die Verschraubungsachse der jeweils anzuziehenden Schraubverbindung zu verstehen.

Bevorzugt umfasst der Wegsensor zumindest eine der Rollen und einen die jeweilige Rollenachse detektierenden Dreh- oder Winkelencoder. Eine oder mehrere Rollen werden derart ausgebildet, dass darüber die aktuelle Längsposition des Werkzeugs entlang des Rings bzw. den Ringflanschen als Positionswert registriert werden kann.

Ein Winkelencoder erfasst die Drehwinkel der jeweiligen Rolle, woraus in der Steuer- und Auswerteeinheit die exakte, von der Rolle zurückgelegte Wegstrecke berechnet werden kann, um so zu exakten Werten bei der Wegsteuerung zum Anfahren der nächsten Schraubverbindung zu gelangen. Damit wird die Wegsteuerung exakt und überprüfbar ausgestaltet. Ferner kann mittels des Dreh- oder Winkelencoders die Drehgeschwindigkeit der Rolle bzw. der Rollenachse ermittelt werden.

Da angetriebene Rollen oft mit einem gewissen Schlupf arbeiten, ist es von Vorteil, wenn die drehwinkelcodierte Rolle nicht eine angetriebene Rolle, sondern eine der nicht angetriebenen Rollen ist.

Bevorzugt ist die drehwinkelcodierte Rolle eine der den Werkzeugträger seitlich abstützenden, zusätzlichen Rollen. Der Vorteil dieser Ausgestaltung liegt darin begründet, dass bei dem Turm einer Windkraftanlage die Innenwandungen in der Regel relativ glattwandig sind, so dass eine an dieser Fläche ablaufende Rolle besonders exakte und reproduzierbare Winkelwerte zeigt.

Alternativ umfasst der Wegsensor ein Messrad und einen die Messradachse detektierenden Dreh- oder Winkelencoder. Bevorzugt ist das Messrad gegen einen der Ringflansche abgestützt. Mithin ist das Messrad in diesem Fall vorzugsweise horizontal ausgerichtet und läuft entlang der Innenumfangsfläche des jeweiligen Ringflansches. Das Messrad kann auch derart vertikal am Werkzeugträger angeordnet sein, dass das Messrad auf einer horizontalen Anlagefläche des einen oder anderen Ringflansches abrollt.

Die Erfindung schließt die technische Lehre ein, dass der Werkzeugträger für das Fahren entlang des Rings mit einem elektrischen Fahrantrieb versehen ist, und die Steuer- und Auswerteeinheit dazu ausgebildet ist, über Fahrantrieb-Steuersignale den Werkzeugträger bis in eine Längsposition zu fahren, in der das Werkzeug der Schraubposition der jeweils anzuziehenden Schraubverbindung gegenüberliegt, und über Werkzeug-Steuersignale das Anziehen der jeweiligen Schraubverbindung durchzuführen. Somit empfängt die Steuer- und Auswerteeinheit die vom Sensor erfassten Positionswerte und Spaltgrößenwerte und legt diese geordnet ab, wobei die Steuer- und Auswerteeinheit ferner den Antrieb des Werkzeugträgers und den Anziehvorgang der jeweiligen Schraubverbindung steuert.

Vorzugsweise umfasst die Steuer- und Auswerteeinheit zum Anfahren der jeweiligen Längsposition der anzuziehenden Schraubverbindungen ein Wegsteuermodul mit einer Wegsteuerung, welche dazu ausgebildet ist, nach Erreichen einer vorgegebenen Weglänge als Zielgröße den Fahrantrieb anzuhalten. Die als ein Modul der Steuereinheit implementierte Wegsteuerung ist dazu ausgebildet, nach Erreichen einer in der Steuereinheit vorgegebenen Weggröße als Soll- bzw. Zielgröße den Fahrantrieb anzuhalten, und so die Fahrt des Werkzeugträgers zu unterbrechen. Mittels des Fahrantriebs wird der Werkzeugträger mit dem darauf angeordneten Werkzeug so kontrolliert gefahren, bis sich aus den Signalen des Wegsensors ergibt, dass sich das Werkzeug an derjenigen Schraubposition befindet, die der Primärposition in Umfangsrichtung am nächsten ist. Hierzu werden die Signale des Wegsensors steuerungstechnisch zu Fahrantrieb-Steuersignalen für den Antrieb des Fahrzeugs verarbeitet.

Die Steuer- und Auswerteeinheit ist außerdem dazu ausgebildet, mittels Werkzeug-Steuersignalen den Anziehvorgang der jeweiligen Schraubverbindung zu steuern.

Weitere Einzelheiten und Vorteile ergeben sich aus der nachfolgenden Beschreibung eines auf der Zeichnung dargestellten Ausführungsbeispiels. Darin zeigen:
- Figur 1:: eine Perspektivdarstellung in zwei nur teilweise gezeigte, miteinander verbundene ringförmige Abschnitte eines Turms einer Windkraftanlage mit einem als Wagen ausgebildeten verfahrbaren Werkzeugträger einer Vorrichtung zum Anziehen von Schraubverbindungen;
- Figur 2:: eine Schnittdarstellung der beiden Abschnitte gemäß Figur 1,
- Figur 3:: eine Perspektivdarstellung eines Messrades der Einheit einer Vorrichtung zum Anziehen von Schraubverbindungen gemäß Figur 1;
- Figur 4:: eine Ansicht eines Wegsensors der Einheit der Vorrichtung zum Anziehen von Schraubverbindungen gemäß Figur 1.

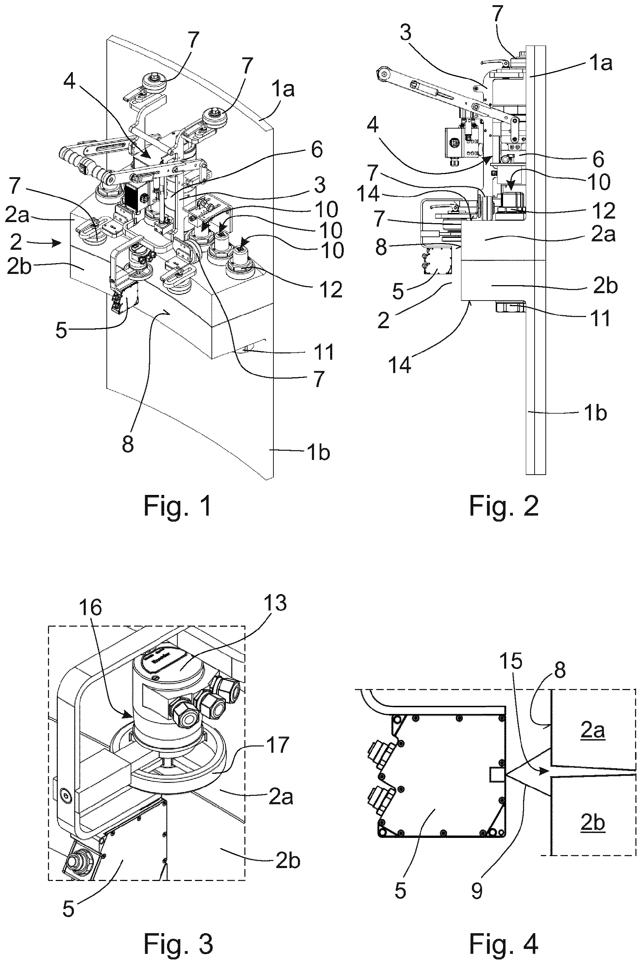

In den Figuren 1 und 2 sind zwei teilweise abgebildete Abschnitte 1a, 1b eines - hier nicht gezeigten - Turms einer Windkraftanlage dargestellt. Die beiden Abschnitte 1a, 1b weisen einen jeweiligen Ringflansch 2a, 2b auf, der über eine Vielzahl von Schraubverbindungen 10, die sich an Schraubpositionen befinden, welche in Reihe und gleichmäßig am Umfang verteilt entlang der gegeneinander zu spannenden Ringflansche 2a, 2b angeordnet sind. Jede Schraubenverbindung 10 setzt sich aus einem Gewindeelement 11 und einer darauf aufgeschraubten Mutter 12 zusammen, wobei die Mutter 12 gegenüber dem ersten, und das Gewindeelement 11 gegenüber dem zweiten Ringflansch 2a, 2b abgestützt ist.

Entlang des durch die Ringflansche 2a, 2b gebildeten Rings 2 ist ein Werkzeugträger 3 einer - nicht weiter gezeigten - Vorrichtung zum Anziehen von Schraubverbindungen verfahrbar angeordnet. Am Werkzeugträger 3 ist ein Werkzeug 4 mit einem hydraulisch betriebenen Schraubenspannzylinder 6 zum Anziehen der Schraubverbindung sowie ein als Laserscanner 5 ausgebildeter Sensor zur Messung eines Spaltgrößenwertes befestigt, wobei der Werkzeugträger 3 auf mehreren Rollen 7 entlang einer Innenmantelfläche des ersten Abschnitts 1a sowie des ersten Ringflansches 2a verfahrbar ist. Das Werkzeug 4 und der Laserscanner 5 sind ferner mit einer - hier nicht dargestellten - Steuer- und Auswerteeinheit verbunden, deren Funktionsweise nachfolgend näher beschrieben wird.

Die Steuer- und Auswerteeinheit kann beispielsweise am Werkzeugträger 3 befestigt oder extern an einer Energieversorgungseinheit angeordnet sowie über einen Leitungsstrang mit den entsprechenden Bauteilen verbunden sein.

Der Werkzeugträger 3 ist zu seiner vertikalen Abstützung auf der Oberseite des ersten Ringflansches 2a mit Rollen 7 versehen, die auf horizontalen Drehachsen an dem Werkzeugträger 3 abgestützt sind und darauf abrollen. Aufgabe dieser Rollen 7 ist es vor allem, das Gewicht des Werkzeugträgers 3 mit dem darauf angeordneten Werkzeug zu tragen, wobei eine dieser Rollen 7 eine angetriebene Rolle 7 ist.

Ferner weist der Werkzeugträger 3 zu seiner seitlichen Abstützung gegen den ersten Abschnitt 1a sowie gegen den ersten Ringflansch 2a zusätzliche Rollen 7 auf, deren Drehachsen im Wesentlichen parallel zur Innenwandung des ersten Abschnitts 1a bzw. im Wesentlichen vertikal angeordnet sind.

Der Werkzeugträger 3 ist für das Fahren entlang eines durch die Ringflansche 2a, 2b gebildeten Rings 2 mit einem - hier nicht näher gezeigten - elektrischen Fahrantrieb versehen. Der Fahrantrieb treibt zumindest eine der Rollen 7 des Werkzeugträgers 3 an, sodass der Werkzeugträger 3 in eine Bewegung entlang der Innenmantelfläche 8 der Ringflansche 2a, 2b versetzt wird.

Die Steuer- und Auswerteeinheit ist dazu ausgebildet, über Fahrantrieb-Steuersignale den Fahrantrieb anzusteuern, um den Werkzeugträger 3 bis in eine bestimmte Längsposition zu fahren, in der das Werkzeug 4 der Schraubposition der jeweils anzuziehenden Schraubverbindung gegenüberliegt. Anschließend wird über Werkzeug-Steuersignale, die ebenfalls von der Steuer- und Auswerteeinheit ergehen, mittels des Schraubenspannzylinders 6 das Anziehen der jeweiligen Schraubverbindung 10 durchgeführt.

Ferner umfasst die Steuer- und Auswerteeinheit zum Anfahren der jeweiligen Längsposition der anzuziehenden Schraubverbindungen ein Wegsteuermodul mit einer Wegsteuerung, welche dazu ausgebildet ist, nach Erreichen einer vorgegebenen Weglänge als Zielgröße den Fahrantrieb anzuhalten.

Gemäß einem erfindungsgemäßen Verfahren zum Anziehen der Schraubverbindungen 10 wird der Werkzeugträger 3 zunächst mindestens einmal entlang der gesamten Länge des Rings 2, also über dessen gesamte Umfangslänge, bewegt. Dabei werden in sich wiederholender Weise mehrere Längspositionen des Werkzeugträgers 3 in Bezug auf die Ringflansche 2a, 2b als jeweilige Positionswerte erfasst, wobei mittels des Laserscanners 5 die an der jeweiligen aktuellen Position vorhandene Größe des Spalts 15 zwischen den beiden Ringflanschen 2a, 2b als Spaltgrößenwert detektiert wird.

Der Positionswert und der an dieser Position detektierte aktuelle Spaltgrößenwert werden an die Steuer- und Auswerteeinheit übermittelt, welche sämtliche Spaltgrößenwerte gemeinsam mit den jeweils zugeordneten Positionswerten als Datensätze speichert. Ferner ermittelt die Steuer- und Auswerteeinheit aus den in den Datensätzen enthaltenen Spaltgrößenwerten den größten oder einen überdurchschnittlich großen Spaltgrößenwert und bestimmt die Position mit dem größten oder dem überdurchschnittlich großen Spaltgrößenwert als Primärposition. Mit anderen Worten entspricht die Primärposition der Position am Umfang der Ringflansche 2a, 2b, an dem der Spalt 15 zwischen den beiden Ringflanschen 2a, 2b am größten oder überdurchschnittlich groß ist, wobei primär dieser Spalt 15 mittels eines Schraubenanzugs der jeweiligen Schraubenverbindung 10 an dieser Position geschlossen oder zumindest vorerst verkleinert wird. Mithin ist die anschließend durch das Werkzeug angezogene Schraubverbindung 10 jene, welche sich an der Primärposition oder an einer in Umfangsrichtung auf die Primärposition unmittelbar davor oder dahinter folgenden Schraubposition befindet.

Nachdem die Schraubverbindung 10 an der Primärposition angezogen wurde, können diese Verfahrensschritte noch einmal oder mehrfach wiederholt werden. Die Schritte können auch lange wiederholt werden, bis der Spalt 15 zwischen den Ringflanschen 2a, 2b im Wesentlichen geschlossen ist, wobei nach und nach mehrere Primärpositionen bestimmt werden, die an unterschiedlichen Positionen der Ringflansche 2a, 2b vorliegen können. Somit werden mehrere Schraubverbindungen 10 nacheinander angezogen, bis der Spalt 15 zwischen den Ringflanschen 2a, 2b im Wesentlichen geschlossen ist.

Anschließend werden sämtliche bis dahin noch nicht angezogenen Schraubverbindungen 10 durch das Werkzeug angezogen. Damit werden letztlich alle Schraubverbindungen 10, die zur Verbindung der beiden Abschnitten 1a, 1b des Turms vorgesehen sind, an- und/oder nachgezogen, und der Spalt 15, der beispielsweise aus Form-, Fertigungs- und Lageungenauigkeiten zwischen den Abschnitten 1a, 1b und/oder den Ringflanschen 2a, 2b vorliegen können, geschlossen.

Der jeweilige Positionswert, welcher der Längsposition des Werkzeugträgers 3 relativ zu den Ringflanschen 2a, 2b entspricht, wird mittels eines in Figur 3 gezeigten Wegsensors 16 erfasst. Mithin werden entlang der gesamten Länge des Rings eine Vielzahl von Positionswerten erfasst, die vorliegend jeweils einer Schraubposition der Schraubverbindung 10 entsprechen.

Alternativ können die Positionswerte auch an Orten zwischen zwei Schraubverbindungen 10 bestimmt werden. Von Vorteil ist jedoch, wenn jeder Schraubposition einer Schraubverbindung 10 ein jeweiliger Positionswert zugeteilt wird.

Nach Figur 3 umfasst der am Werkzeugträger 3 angeordnete Wegsensor 16 ein Messrad 17 und einen die Messradachse detektierenden Winkelencoder 13. Alternativ oder ergänzend kann der Wegsensor 16 auch einen Drehencoder aufweisen. Das Messrad 17 ist horizontal ausgerichtet und kommt, wie in Figur 4 zu sehen ist, an der Innenmantelfläche 8 des ersten Ringflansches 2a zur Anlage und rollt daran während der Bewegung des Werkzeugträgers 3 entlang der Ringflansche 2a, 2b ab. Mithin ist das Messrad 17 gegen den ersten Ringflansch 2a abgestützt. Alternativ kann das Messrad 17 auch gegen den zweiten Ringflansch 2b abgestützt sein oder auf einer in Figur 2 dargestellten horizontalen Anlagefläche 14 des jeweiligen Ringflansches 2a, 2b abrollen.

Ferner alternativ ist denkbar, dass der Wegsensor 16 zumindest eine der Rollen 7 des Werkzeugträgers 3 und einen die jeweilige Rollenachse detektierenden Dreh- oder Winkelencoder umfasst. Mit anderen Worten kann in diesem Fall auf das eigenständige Messrad 17 verzichtet werden, wobei zumindest eine der Rollen 7 des Werkzeugträgers 3, welche gegen die Abschnitte 1a, 1b oder die Ringflansche 2a, 2b abgestützt sind und mit einem Dreh- oder Winkelencoder zusammenwirken, derart ausgebildet ist, dass die Längsposition des Werkzeugträgers 3 bezogen auf den jeweiligen Ringflansch 2a, 2b bestimmbar ist.

Nach Figur 4 ist der Laserscanner 5 senkrecht auf die Innenmantelfläche 8 der beiden Ringflansche 2a, 2b gerichtet, wobei dessen Messstrahl 9 in der Kontaktebene zwischen den beiden Ringflanschen 2a, 2b ausgerichtet ist. Der Laserscanner 5 ist dazu eingerichtet die Oberfläche der Ringflansche 2a, 2b sowie den dazwischen vorliegenden Spalt 15 abzutasten, um daraus für die Höhe des Spalts den Spaltgrößenwert zu ermittelten und ein dementsprechendes Signal an die Steuer- und Auswerteeinheit weiterzuleiten.

### Bezugszeichenliste

- 1a, 1b: Abschnitt
- 2: Ring
- 2a, 2b: Ringflansch
- 3: Werkzeugträger
- 4: Werkzeug
- 5: Laserscanner
- 6: Schraubenspannzylinder
- 7: Rolle
- 8: Innenmantelfläche
- 9: Messstrahl
- 10: Schraubverbindung
- 11: Gewindeelement
- 12: Mutter
- 13: Winkelencoder
- 14: Anlagefläche
- 15: Spalt
- 16: Wegsensor
- 17: Messrad

## Patentansprüche

1. Verfahren zum Anziehen von Schraubverbindungen (10), die sich an Schraubpositionen befinden, welche in Reihe entlang zweier gegeneinander zu spannender Ringflansche (2a, 2b) angeordnet sind, wobei sich jede Schraubverbindung (10) aus einem Gewindeelement (11) und einer darauf aufgeschraubten Mutter (12) zusammensetzt und die Mutter (12) gegenüber dem einen, und das Gewindeelement (11) gegenüber dem anderen der beiden Ringflansche (2a, 2b) abgestützt ist, mit einem entlang des durch die Ringflansche (2a, 2b) gebildeten Rings (2) fahrbaren Werkzeugträger (3), dessen Bestandteile zumindest ein Werkzeug (4) zum Anziehen der Schraubverbindung (10) und ein Sensor (5) sind, **dadurch gekennzeichnet,**
a) **dass** der Werkzeugträger (3) mindestens einmal entlang der gesamten Länge des Rings (2) bewegt wird, und dass dabei wiederholt
- mittels eines an dem Werkzeugträger (3) angeordneten Wegsensors (16) die jeweils aktuelle Längsposition des Werkzeugträgers (3) in Bezug auf den Ring (2) als Positionswert, und
- mittels des Sensors (5) die an der jeweiligen aktuellen Position vorhandene Größe des Spalts zwischen den beiden Ringflanschen als Spaltgrößenwert
erfasst und an eine Steuer- und Auswerteeinheit übermittelt werden, welche die einzelnen Spaltgrößenwerte gemeinsam mit den jeweils zugeordneten Positionswerten als Datensätze speichert,
b) **dass** die Steuer- und Auswerteeinheit aus den in den Datensätzen enthaltenen Spaltgrößenwerten den größten oder einen überdurchschnittlich großen Spaltgrößenwert ermittelt und den diesem ermittelten Spaltgrößenwert zugeordneten Positionswert als eine Primärposition bestimmt,
c) und **dass** die anschließend durch das Werkzeug angezogene Schraubverbindung (10) jene ist, welche sich an der Primärposition oder an einer in Umfangsrichtung auf die Primärposition unmittelbar folgenden Schraubposition (10) befindet.

2. Verfahren nach Anspruch 1, **dadurch gekennzeichnet, dass** die Schritte a) bis c) einmal oder mehrfach wiederholt werden.

3. Verfahren nach Anspruch 2, **dadurch gekennzeichnet, dass** wiederum anschließend sämtliche bis dahin noch nicht angezogenen Schraubverbindungen (10) durch das Werkzeug (4) angezogen werden.

4. Verfahren nach einem der Ansprüche 1 bis 3, **gekennzeichnet durch** einen Laserscanner als Sensor (5).

5. Verfahren nach Anspruch 4, **gekennzeichnet durch** die Ausrichtung des Messstrahls des Laserscanners (5) in der Kontaktebene zwischen den beiden Ringflanschen (2a, 2b).

6. Verfahren nach einem der vorangehenden Ansprüche, **dadurch gekennzeichnet, dass** der Werkzeugträger (3) auf mehreren Rollen (7) entlang des durch die Ringflansche (2a, 2b) gebildeten Rings verfahren wird.

7. Verfahren nach Anspruch 6, **dadurch gekennzeichnet, dass** der Wegsensor (16) zumindest eine der Rollen (7) des Werkzeugträgers (3) und einen die jeweilige Rollenachse detektierenden Dreh- oder Winkelencoder umfasst.

8. Verfahren nach Anspruch 1 bis 6, **dadurch gekennzeichnet, dass** der Wegsensor (16) ein Messrad (17) und einen die Messradachse detektierenden Dreh- oder Winkelencoder (13) umfasst.

9. Verfahren nach Anspruch 8, **dadurch gekennzeichnet, dass** das Messrad (17) gegen einen der Ringflansche (2a, 2b) abgestützt ist.

10. Verfahren nach einem der vorangehenden Ansprüche **dadurch gekennzeichnet, dass** der Werkzeugträger (3) für das Fahren entlang des Rings mit einem elektrischen Fahrantrieb versehen ist, und die Steuer- und Auswerteeinheit dazu ausgebildet ist, über Fahrantrieb-Steuersignale den Werkzeugträger (3) bis in eine Längsposition zu fahren, in der das Werkzeug der Schraubposition der jeweils anzuziehenden Schraubverbindung (10) gegenüberliegt, und über Werkzeug-Steuersignale das Anziehen der jeweiligen Schraubverbindung (10) durchzuführen.

11. Verfahren nach Anspruch 10, **dadurch gekennzeichnet, dass** die Steuer- und Auswerteeinheit zum Anfahren der jeweiligen Längsposition der anzuziehenden Schraubverbindungen ein Wegsteuermodul mit einer Wegsteuerung umfasst, welche dazu ausgebildet ist, nach Erreichen einer vorgegebenen Weglänge als Zielgröße den Fahrantrieb anzuhalten.

## Claims

1. Method for tightening screw connections (10) which are situated at screw positions that are disposed in a row along two annular flanges (2a, 2b) that are to be tensioned in relation to one another, wherein each screw connection (10) is composed of a threaded element (11) and a nut (12) screw-fitted thereon, and the nut (12) is supported in relation to the one of the two annular flanges (2a, 2b) and the threaded element (11) is supported in relation to the other of the two annular flanges (2a, 2b), having a tool carrier (3) which is capable of travelling along the ring (2) that is formed by the annular flanges (2a, 2b), the component parts of said tool carrier (3) being at least one tool (4) for tightening the screw connection (10) and a sensor (5), **characterized in that**
a) the tool carrier (3) is moved along the entire length of the ring (2) at least once, and **in that** repeatedly
- the respective current longitudinal position of the tool carrier (3) in relation to the ring (2) is herein detected as a position value by means of a distance sensor (16) disposed on the tool carrier (3), and
- the size of the gap present between the two annular flanges at the respective current position is detected as the gap size value by means of the sensor (5),
and these are transmitted to a control and evaluation unit which stores the individual gap size values conjointly with the respectively assigned position values as datasets;
b) the control and evaluation unit from the gap size values contained in the datasets determines the largest gap size value or a gap size value of above-average size, and determines the position value assigned to said determined gap size value as a primary position;
c) and the screw connection (10) subsequently tightened by the tool is that screw connection that is situated at the primary position or at a screw position (10) that in a circumferential direction directly follows the primary position.

2. Method according to Claim 1, **characterized in that** steps a) to c) are repeated once or multiple times.

3. Method according to Claim 2, **characterized in that** in turn all screw connections (10) that to this point have not yet been tightened are subsequently tightened by the tool (4).

4. Method according to one of Claims 1 to 3, **characterized by** a laser scanner as the sensor (5).

5. Method according to Claim 4, **characterized by** the alignment of the measuring beam of the laser scanner (5) in the contact plane between the two annular flanges (2a, 2b).

6. Method according to one of the preceding claims, **characterized in that** the tool carrier (3) is displaced on a plurality of rollers (7) along the ring formed by the annular flanges (2a, 2b).

7. Method according to Claim 6, **characterized in that** the distance sensor (16) comprises at least one of the rollers (7) of the tool carrier (3) and a rotary or angular encoder that detects the respective roller axle.

8. Method according to Claim 1 to 6, **characterized in that** the distance sensor (16) comprises a measuring wheel (17) and a rotary or angular encoder (13) that detects the measuring wheel axle.

9. Method according to Claim 8, **characterized in that** the measuring wheel (17) is supported in relation to one of the annular flanges (2a, 2b).

10. Method according to one of the preceding claims, **characterized in that** the tool carrier (3) for travelling along the ring is provided with an electric travel drive, and the control and evaluation unit by way of travel drive control signals is configured for moving the tool carrier (3) up to a longitudinal position in which the tool lies opposite the screw position of the respective screw connection (10) to be tightened, and by way of tool control signals is configured for carrying out the tightening of the respective screw connection (10).

11. Method according to Claim 10, **characterized in that** the control and evaluation unit for moving to the respective longitudinal position of the screw connections to be tightened has a distance control module having a distance controller which is configured for stopping the travel drive upon reaching a predefined length of distance as the target variable.

## Revendications

1. Procédé de serrage de raccords à vis (10) qui se trouvent dans des positions de vissage qui sont disposées en série le long de deux brides annulaires (2a, 2b) à serrer l'une contre l'autre, dans lequel chaque raccord à vis (10) est composé d'un élément fileté (11) et d'un écrou (12) vissé sur celui-ci, et l'écrou (12) est soutenu par rapport à l'une et l'élément fileté (11) est soutenu par rapport à l'autre des deux brides annulaires (2a, 2b), comprenant un porte-outil (3) mobile le long de l'anneau (2) formé par les brides annulaires (2a, 2b) et dont les composants sont au moins un outil (4) pour serrer le raccord à vis (10) et un capteur (5),
**caractérisé**
a) **en ce que** le porte-outil (3) est déplacé au moins une fois sur toute la longueur de l'anneau (2), et en ce qu'à cette occasion, de manière répétée,
- au moyen d'un capteur de course (16) disposé au niveau du porte-outil (3), la position longitudinale respectivement actuelle du porte-outil (3) par rapport à l'anneau (2) est détectée en tant que valeur de position, et
- au moyen du capteur (5), la dimension de l'écartement, présente à la position respectivement actuelle, entre les deux brides annulaires est détectée en tant que valeur de dimension de l'écartement
et lesdites valeurs sont transmises à une unité de commande et d'évaluation qui mémorise les valeurs de dimension de l'écartement individuelles conjointement avec les valeurs de position respectivement associées sous forme d'enregistrements,
b) **en ce que** l'unité de commande et d'évaluation établit parmi les valeurs de dimension de l'écartement contenues dans les enregistrements la plus grande valeur de dimension de l'écartement ou une valeur de dimension de l'écartement supérieure à la moyenne et détermine la valeur de position associée à cette valeur de dimension de l'écartement établie en tant que position primaire,
c) et **en ce que** le raccord à vis (10) qui sera ensuite serré par l'outil est celui qui se trouve dans la position primaire ou dans une position de vissage (10) qui suit immédiatement la position primaire dans une direction circonférentielle.

2. Procédé selon la revendication 1, **caractérisé en ce que** les étapes a) à c) sont répétées une ou plusieurs fois.

3. Procédé selon la revendication 2, **caractérisé en ce qu'**à leur tour, ensuite tous les raccords à vis (10) pas encore serrés seront serrés par l'outil (4).

4. Procédé selon l'une quelconque des revendications 1 à 3, **caractérisé par** un scanner laser en tant que capteur (5) .

5. Procédé selon la revendication 4, **caractérisé par** l'alignement du faisceau de mesure du scanner laser (5) dans le plan de contact entre les deux brides annulaires (2a, 2b).

6. Procédé selon l'une quelconque des revendications précédentes, **caractérisé en ce que** le porte-outil (3) avance sur plusieurs galets (7) le long de l'anneau formé par les brides annulaires (2a, 2b).

7. Procédé selon la revendication 6, **caractérisé en ce que** le capteur de course (16) comprend au moins l'un des galets (7) du porte-outil (3) et un codeur rotatif ou angulaire détectant l'axe de galet respectif.

8. Procédé selon les revendications 1 à 6, **caractérisé en ce que** le capteur de course (16) comprend une roue de mesure (17) et un codeur rotatif ou angulaire (13) détectant l'axe de roue de mesure.

9. Procédé selon la revendication 8, **caractérisé en ce que** la roue de mesure (17) est soutenue contre l'une des brides annulaires (2a, 2b).

10. Procédé selon l'une quelconque des revendications précédentes, **caractérisé en ce que** le porte-outil (3) est muni d'un entraînement d'avance électrique pour avancer le long de l'anneau, et l'unité de commande et d'évaluation est réalisée pour faire avancer le porte-outil (3) à l'aide de signaux de commande d'entraînement d'avance jusqu'à une position longitudinale dans laquelle l'outil de la position de vissage est opposé au raccord à vis (10) respectivement à serrer, et pour effectuer à l'aide de signaux de commande d'outil le serrage du raccord à vis (10) respectif.

11. Procédé selon la revendication 10, **caractérisé en ce que** pour s'approcher de la position longitudinale respective des raccords à vis à serrer, l'unité de commande et d'évaluation comprend un module de commande de course muni d'une commande de course qui est réalisée pour arrêter l'entraînement d'avance une fois qu'une longueur de course prédéfinie comme grandeur cible est atteinte.
